# EUROPEAN PATENT APPLICATION

(11) **EP 0 832 786 A2**
(43) Date of publication of application: **01.04.1998**
(21) Application number: 97116427.2
(22) Date of filing: 20.09.1997
(51) Int. Cl.: B60Q 1/14

(54) **Construction of a composite switch**

(30) Priority: 26.09.1996 JP 273931/96
(71) Applicant: Niles Parts Co., Ltd., Tokyo 143 (JP)
(72) Inventor: Yokoyama, Toshiaki, 5-28-6, Omorinishi Otaku Tokyo 143 (JP)
(74) Representative: Luderschmidt, Schüler & Partner GbR

(57) **Abstract**

In a composite switch, a plurality of knobs (3), (4) and (5) are juxtaposed. The knob (3) is a manipulation body for a push button, which is disposed at the center and in which engaging portion (3h), with which engaging pieces are contacted with pressure, are formed. In the knob (3) there is formed a supporting portion (3c) having an insertion portion (3d), into which node bodies (7) and (8) as well as a node spring are inserted. The knobs (4) and (5) are manipulation bodies for pivot switches disposed on the two sides of the knob (3), adjacent thereto. Engaging pieces (4h) are formed on the surfaces opposite to the knob (3). In the knobs (4) and (5) there are formed node grooves (4g) and (5b), with which the node bodies (7) and (8) are contacted with pressure, on the surfaces opposite to the knob (3). The node spring (9) is a coil spring disposed within the supporting portion (3c) in a transversal direction, an end of which is inserted into a blind hole formed in the node body (7) and the other end of which is inserted into a blind hole (8a) formed in the node body (8).

## Description

The present invention relates to a construction of a composite switch such as a steering switch, etc., e.g. disposed between two spoke portions at an outer periphery portion of a steering pad in an automobile, etc.

Heretofore, as this kind of techniques, there are know techniques disclosed e.g. in JP-A-Sho 60-76444 or JP Utility Model-A-Hei 3-130 746. These prior art techniques are so-called steering switches, all of which use rubber contacts. Elasticity of bent rubber contacts is used for obtaining node feeling of the switches.

However, the prior art steering switches give node feeling owing to the fact that the rubber contacts are bent, when the knobs are manipulated by pushing, and have a problem that no satisfactory manipulation feeling can be obtained.

An object of the present invention is to provide a steering switch having a good manipulation feeling.

This object is solved, according to the invention, with the features of claim 1.

Preferred embodiments are the subject matter of dependent claims.

Construction of a composite switch according to the invention, in which a plurality of knobs are juxtaposed, erroneous operations can be prevented, owing to the fact that one of the knobs is a manipulation body for a push button switch and the other knobs are manipulation bodies for pivot switches disposed on both the sides of the former knob, adjacent thereto.

It is possible to reduce the size of the composite switch by arranging two node bodies and a node spring in one place, owing to the fact that a supporting portion having an insertion portion, into which the node bodies and the node spring are inserted, is formed in the former knob.

It is possible to construct the composite switch consisting of three knobs by using one node spring, to decrease a number of parts and a number of mounting steps and to lower fabrication cost, owing to the fact that the node spring is disposed within the supporting portion in a transversal direction, one end of which is inserted into a blind hole formed in one of the node bodies and the other end of which is inserted into a blind hole formed in the other of the node bodies.

According to a preferred embodiment of the invention, the two side knobs are thrust outward by the node spring disposed in the central knob, which prevents that the gaps between different knobs are enlarged, owing to the fact that in each of the latter knobs engaging pieces are formed on a surface facing the former knob and on the other hand an engaging portion, with which the engaging pieces are contacted with pressure, is formed in the former knob.

Node grooves can be used for the push button switch and for the pivot switches in common and they can be gathered in a narrow place, which made it possible to reduce the size of the whole switch, owing to the fact that in the latter knobs node grooves, with which the node bodies are contacted with pressure, are formed on surfaces facing the former knob.

Node grooves can be used for the push button switch and for the pivot switches in common and it is possible to reduce the size of the composite switch and also to decrease the number of parts such as the node bodies and the node spring and the number of mounting steps, owing to the fact that each of the node grooves includes a first node groove, to which one of the node bodies is contacted with pressure, when the knobs are pivoted, and a second node groove, to which one of the node bodies is contacted with pressure, when the knob is manipulated by pushing.

The number of parts for the node spring can be reduced to 1 and in this way it is possible to decrease the number of mounting steps and to lower fabrication cost, owing to the fact that a node member of the knobs consists of a node spring, two node bodies disposed at the two ends of the n ode spring, and node grooves formed on the latter knobs.

It is possible to simplify the construction thereof, owing to the fact that the supporting portion includes a manipulation lever thrusting a thrust operation portion of a tact switch.

It is possible to provide a small composite switch having a simple construction, owing to the fact that each of the latter knobs includes inner side walls operating tact switches juxtaposed to each other, thrust operation portions of which are directed outward.

It is possible to provide a steering switch including a push button and two pivot switches, for which switching operation can be effected easily by a driver even at driving, owing to the fact that the knobs are manipulation bodies for a steering switch disposed on a side wall of a pad portion of a steering for an automobile.

Additional details, features, and advantages of the invention can be seen from the following description of embodiments with preference to the drawings, wherein:
Fig. 1 is a front view indicating a mode for carrying out the present invention, which shows a state where a steering switch is mounted;
Fig. 2 is an enlarged side view indicating the mode for carrying out the present invention, which shows the steering switch provided with a bracket;
Fig. 3 is an enlarged plan view indicating the mode for carrying out the present invention, which shows the steering switch partly represented in cross section;
Fig. 4 is an exploded perspective view of the steering switch, indicating the mode for carrying out the present invention;
Fig. 5 is a cross-sectional view of the steering switch indicated in Fig. 3 along a line W-W viewed in a direction indicated by arrows;
Fig. 6 is a cross-sectional view of the steering switch indicated in Fig. 3 along a line X-X viewed in a direction indicated by arrows;
Fig. 7 is a bottom view of the knobs, indicating the mode for carrying out the present invention;
Fig. 8 is an enlarged cross-sectional view of the steering switch indicated in Fig. 2 along a line Y-Y viewed in a direction indicated by arrows;
Fig. 9 is a plan view of a knob, indicating the mode for carrying out the present invention;
Fig. 10 is an enlarged perspective view of the knob view in a direction indicated by arrows I-I; and
Fig. 11 is an enlarged cross-sectional view of a node groove indicated in Fig. 3 along a line Z-Z viewed in a direction indicated by arrows.

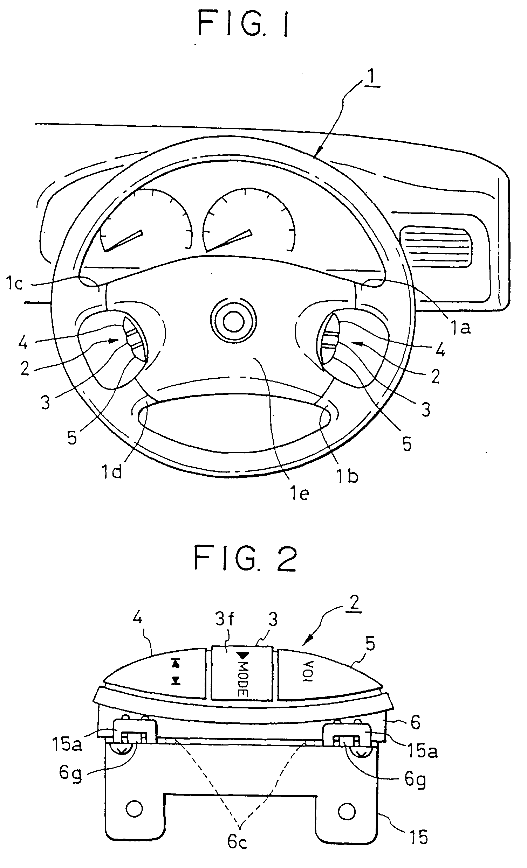

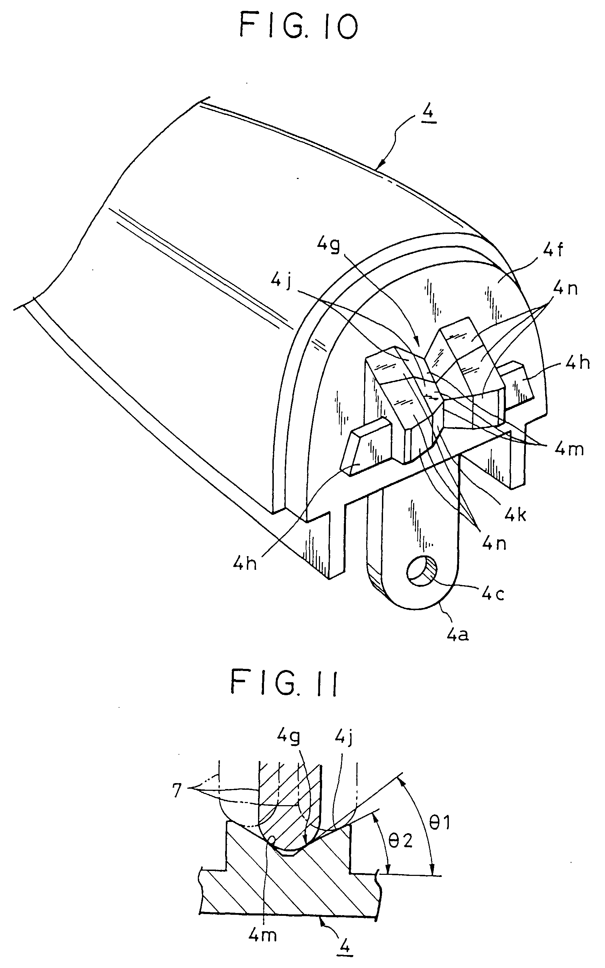

At first, a mode for carrying out the invention will be described in detail, referring to Figs. 1 to 11.

In Fig. 1, reference numeral 1 is e.g. a steering for an automobile, within which an air bag is disposed in a pad portion 1e. The steering 1 includes e.g. four spoke portions 1a, 1b, 1c and 1d. 2 is a steering switch for an automobile, on which an air bag is mounted, disposed between the spoke portion 1a and the spoke portion 1b or between the spoke portion 1c and the spoke portion 1d in an outer peripheral portion of the pad portion 1e of the steering 1. The steering switch 2 is e.g. a switch for operating an audio device, a switch for operating a telephone for an automobile, an ASCD switch, or a switch for operating an automatic transmission. The steering switch 2 accommodated in a case 6, in which three knobs 3, 4 and 5 are disposed, is secured to the steering 1 by means of screws through a bracket 15 indicated in Fig. 2.

The steering switch 2 is symmetric with respect to the center of the knob 3. Since a switch driven by the knob 4 and a switch driven by the knob 5 are mutually symmetric, only the switch driven by the knob 4 will be described in detail and explanation on construction of the switch driven by the knob 5 will be omitted.

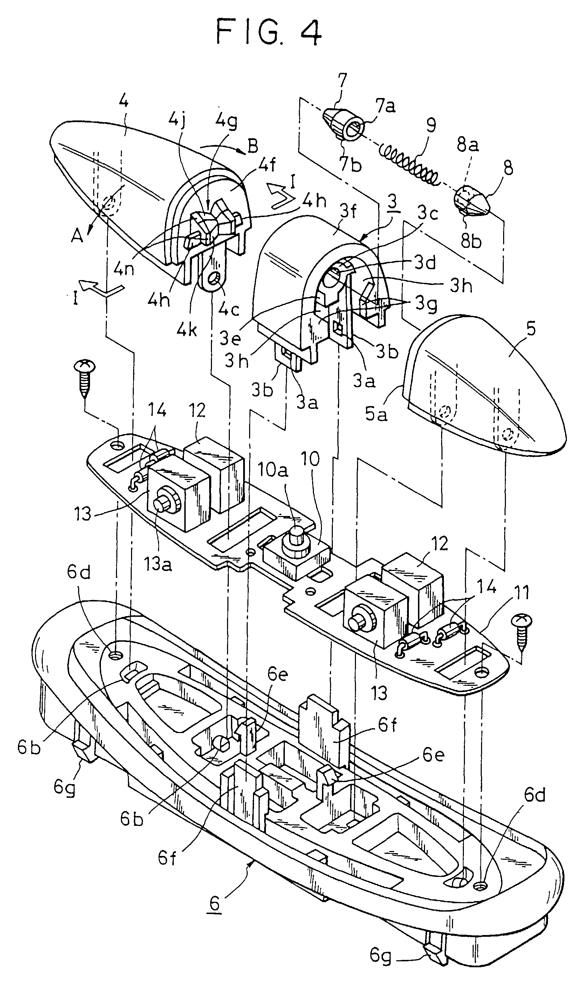

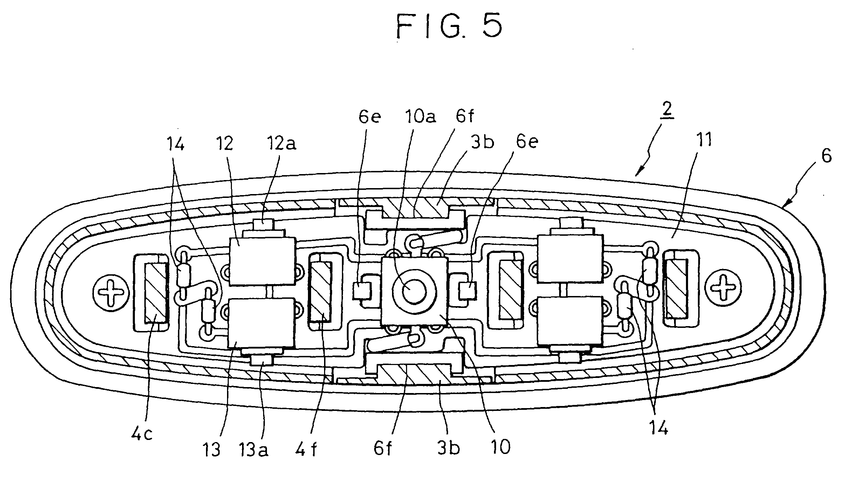

The knob 3 is a manipulation member for a push button switch disposed between the knob 4 and the knob 5. The knobs 3, 4 and 5 have an approximately elliptic form, viewed from the side, as indicated in Figs. 4 and 5, and an arc shape, viewed from the front, as indicated in Figs. 1, 2 and 3. The knob 3 has an approximately semispherical manipulation surface 3f. The knob 4 is a manipulation body for a see-saw switch having an approximately half cone shape in accordance with the outer shape of the knob 3. The knob 5 is a manipulation body for a see-saw switch disposed at a position symmetric to the knob 4.

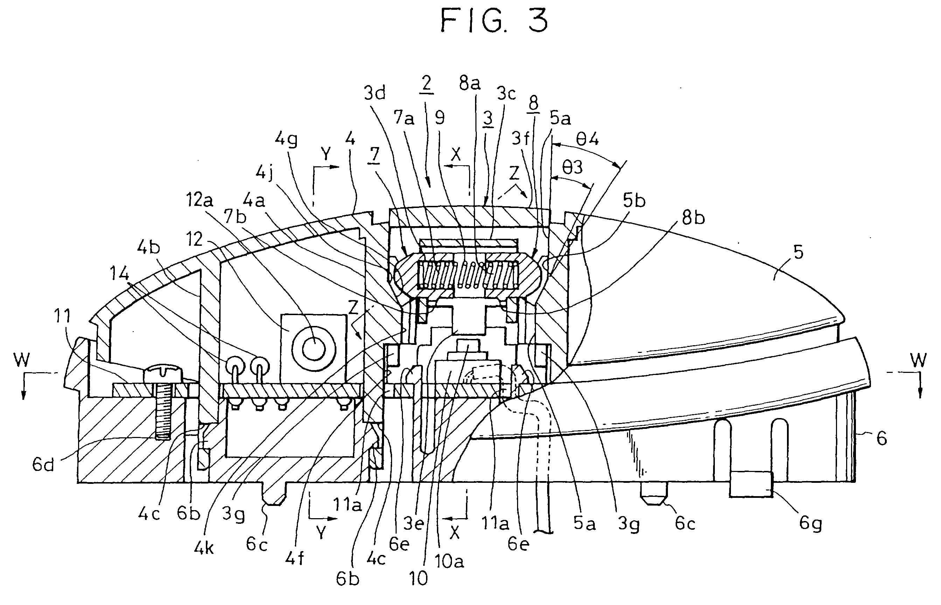

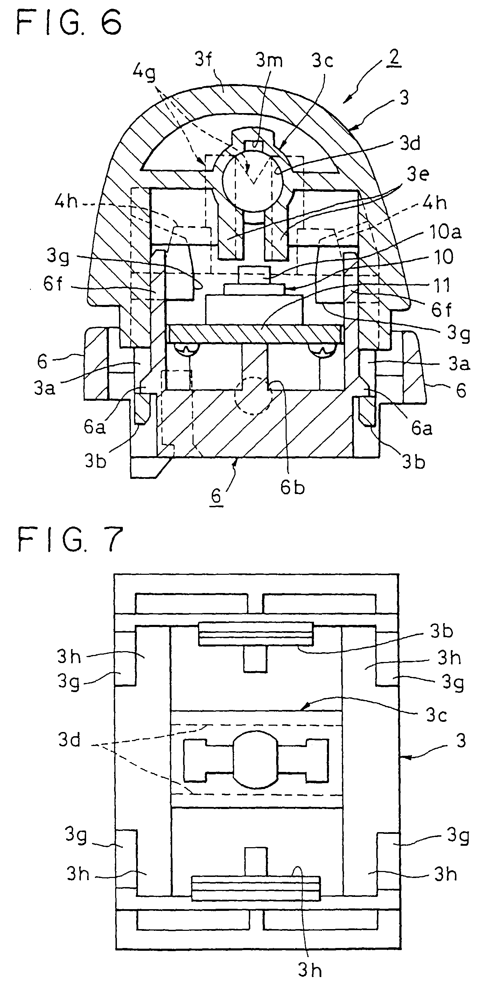

As indicated in Fig. 6, the knob 3 protrudes from elastic engaging pieces 3b having holes 3a, into each of which a nail 6a of the case is movably inserted to stop movement thereof. The stroke of the knob 3, when it is manipulated by pushing is a distance from a position, where the nail 6a inserted into the hole 3a is in contact with the lower end of the hole 3a, to a position, where it is in contact with the upper end thereof, as indicated in Fig. 6. A supporting portion 3c is formed in the knob 3 for disposing node bodies 7 and 8 as well as a node spring 9 therein, as indicated in Fig. 3.

The elastic engaging pieces 3b are formed on both the sides of the knob 3 so as to protrude downward therefrom, as indicated in Figs. 4 and 6, and engaged movably upward and downward with protruding pieces 6f having a rectangular form opened on one side in cross-section, each of which includes the nails 6a. The knob 3 moves straight in right upward and downward directions without any instability, when the knob 3 is operated by pushing, owing to the fact that the elastic engaging pieces 3b are engaged with the protruding pieces 6f having a rectangular form opened on one side in cross-section. As indicated in Figs. 3 and 6, in the supporting portion 3c there are formed an insertion portion 3d having an approximately through-hole shape, into which the node bodies 7 and 8 are inserted, and a manipulation lever 3e operated so as to push a tact switch 10 mounted on a base plate 11.

In the insertion portion 3d there is formed a groove 3m for making engaging nails 7b and 8b of the node bodies 7 and 8 pass through, as indicated in Fig. 6. The shape of the insertion portion 3d is not specifically restricted thereto, but it may have any shape, if the node bodies 7 and 8 can be inserted to be supported therein. For example, the insertion portion 3d may have either a cylindrical shape or a through-hole shape. The manipulation lever 3e hangs down from the insertion portion 3d, as indicated in Figs. 3 and 6, so as to thrust a thrust operation portion 10a for opening and closing the tact switch 10.

As indicated in Figs. 3, 4 and 6, in the knob 3 there are formed protruding pieces 3g so as to protrude inward from the right and left lower ends thereof. The protruding pieces 3g have a function of acting as a stopper preventing that the node bodies 7 and 8 are pushed outward from the knobs 4 and 5 to be moved outward. The protruding pieces 3g form engaging portions 3h, in which engaging pieces 4h protruding transversally from an end surface on the center side of the knob 4 or 5 are movably disposed. The shape of the protruding pieces 3g are not specifically restricted, but they may have any shape, if the engaging pieces 4h are always contacted therewith. For example, the protruding pieces 3g may serve as side walls of the knob 3 in common.

The engaging portions 3h are spaces formed by the two side surfaces of the supporting portion 3c and the protruding pieces 3g, as indicated in Fig. 7. The shape of the engaging portions 3h is not specifically restricted, but it may have any shape, if the engaging pieces 4h can be moved, when the knobs 3, 4 and 5 are manipulated.

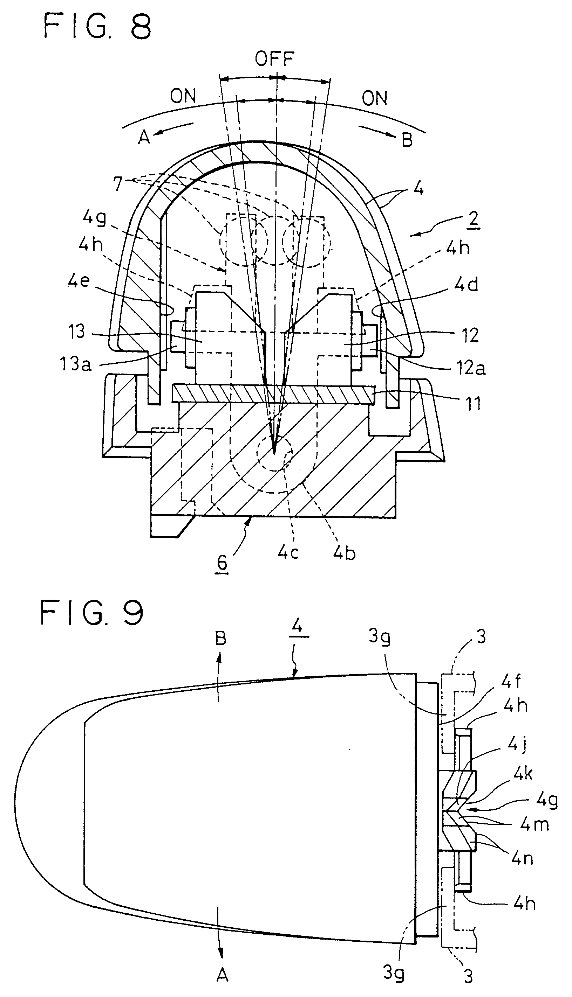

In the knob 4, as indicated in Figs. 3, 4, 8 and 10, shaft pieces 4a and 4b hang, in each of which a shaft hole 4c is formed. As indicated in Figs. 3 and 4, the shaft pieces 4a and 4b pass through the base plate 11 and nails 6b of the case are inserted into the shaft holes, acting as shafts. As indicated in Fig. 8, the knob 4 is a see-saw switch pivotable in directions indicated by arrows A and B around the nails 6b. The knob 4 is approximately semicircular in cross-section between the shaft pieces 4a and 4b and when the knob 4 is manipulated by pivot, inner side walls 4d and 4e thrust operation portions 12a and 13a to open and close tact switches 12 and 13. The tact switches 12 and 13 as well as electric parts such as resistance elements, etc. are mounted on the base plate 11 below the knob 4.

A node groove 4g, with which the node body 7 energized by the node spring 9 is contacted with pressure, is formed so as to protrude from an outer wall 4f of the knob 4 on the side of the knob 3. Another node groove 5b similar to the node groove 4g is formed on an outer wall 5a of the knob 5 at a position which is symmetric to the outer wall 4f, as indicated in Fig. 3. The node groove 4g consists of a first node groove 4j, with which the node body 7 is contacted with pressure, when the knob 4 is manipulated by pushing, and a second node groove 4k, with which the node body 7 is contacted with pressure, when the knob 3 is manipulated by pushing, juxtaposed to each other.

The first node groove 4j is formed obliquely with respect to the outer wall 4f of the knob 4, as indicated in Fig. 3. The first node groove 4j consists of an inclined surface of two-stage structure, in which the lower part has an inclination angle θ3 of about 27° with respect to the vertical direction, while the upper part has an inclination angle θ4 of about 35°. The second node groove 4k is a V-shaped groove formed in a direction perpendicular to the outer wall 4f. As indicated in Fig. 11, the first node groove 4j and the second node groove 4k include e.g. first inclined surfaces 4m having an inclination angle θ1 of about 40° on the center side and second inclined surfaces 4n having an inclination angle θ2 of about 30°, formed outside of the first inclined surfaces, so that the whole is an approximately V-shaped groove of two stages having inclination angles different from each other with respect to a transversal direction.

As indicated in Fig. 9, two engaging pieces 4h are formed so as to protrude from the two side surfaces of the node groove 4g at positions distant from the outer wall 4f approximately by the thickness of the protruding pieces 3g. The engaging pieces 4h are engaged movably with the engaging portions 3h.

In the case 6 there are formed protrusions 6c for positioning it on the bracket 15 indicated in Fig. 2, which is secured to the steering, nails 6g engaging with engaging pieces 15a, and screw holes 6d for fixing it by means of screws. The base plate 11 is fixed by means of the elastic engaging pieces 6e protruding from the case 6 and screws.

Instead of the nails 6a of the case 6 and the holes 3a of the knob 3, nails may be formed in the knob 3 and holes may be formed in the case 6. Further, instead of the nails 6b of the case 6 and the shaft holes 4c of the knob 4, nails may be formed in the knob 4 and holes may be formed in the case. The elastic engaging pieces 6e secure provisionally the base plate 11 to the case 6 by being engaged with peripheral portions of the engaging holes 11a formed in the base plate 11.

The node body 7 and the node body 8 have an identical form, as indicated in Figs. 3 and 4, and are disposed symmetrically to each other. In the node bodies 7 and 8, one end portion of each of them on the side of the node groove 4g or 5b is formed semispherically; a blind hole 7a or 8a, into which the node spring 9 is inserted, is formed in the other end portion; and an engaging nail 7b or 8b is formed in an outer peripheral portion. Each of the node bodies 7 and 8 is supported in the insertion portion 3d by inserting the engaging nails 7b or 8b into the groove 3m of the insertion portion 3d. That is, the node body 7 and the node body 8 are energized by inserting the node spring 9 into the blind holes 7a and 8a and supported by the fact that the engaging nails 7b and 8b are contacted with pressure with the inner periphery of the engaging portions 3d.

Tact switches 10, 12 and 13 are small size push button switches mounted on the base plate 11 and structure and utilization node thereof are not specifically restricted. The tact switch 10 is a push button switch, which is operated by being pushed with the manipulation lever 3e, when the knob 3 is manipulated by pushing. The tact switches 12 and 13 are push button switches, which are operated by being pushed with the inner side walls 4d and 4e, when the knobs 4 and 5 are manipulated by pivot, respectively. The tact switches 12 and 13 are formed so that the thrust operation portions 12a and 13a are directed outward transversally, as indicated in Fig. 5.

Electric parts 14 are electronic elements, etc. such as resistors, capacitors, etc. mounted on the base plate 11 within the knobs 3, 4 and 5, as indicated in Fig. 3. The bracket 15 is a plate member made of metal, resin, etc. for mounting the steering switch 2 between the spoke portion 1a and the spoke portion 1b or between the spoke portion 1c and the spoke portion 1d on a side surface of the pad portion 1e of the steering 1.

A mode of realization of the present invention is constructed as described above and now operation thereof will be described below in detail.

In the knob 3 switched off, as indicated in Figs. 3 and 6, the node bodies 7 and 8 energized by the node spring 9 are contacted with pressure with the first inclined surface 4m of the first node groove 4j in the node groove 4g. The knob 3 is raised upward owing to the fact that the whole first node groove 4j is formed aslant so that it is at an OFF position, where the lower peripheries of the holes 3a are in contact with the nails 6a, as indicated in Fig. 6. The manipulation lever 3e is at an upper position, where it is separated from the thrust operation portion 10a of the tact switch, owing to the fact that the knob 3 is raised to the OFF position.

In the knobs 4 and 5 switched off, the node bodies 7 and 8 mounted on the knob 3 movable only in the upward and downward directions are contacted with pressure with the first inclined surface 4m in the node groove 4g. In this way the knobs 4 and 5 are at OFF positions, where they are in a vertical state, as indicated in Figs. 6 and 8. The inner side walls 4d and 4e are separated from the thrust operation portions of the tact switches 12 and 13.

The knobs 4 and 5 are thrust outward by the node bodies 7 and 8 energized by the node spring 9, respectively. The engaging pieces 4h are contacted with pressure with the inner wall surfaces of the protruding pieces 3g so as to prevent that the gaps between the knob 3 and the knobs 4 and 5 are enlarged.

Erroneous operations can be prevented, because the direction, in which the knob 3 disposed at the center is manipulated by pushing, is the direction of the rotation axis with respect to the surface of the steering, while the direction, in which the knobs 4 and 5 disposed on both the sides of the knob 3 are manipulated by pivot, is a backward or forward direction with respect to the surface of the steering 1 so that they are different from each other, as indicated in Fig. 1.

When the knob 3 is manipulated by pushing, the elastic engaging pieces 3b are guided by protruding pieces 6f having a rectangular form opened on one side so that the whole knob 3 descends right downward and it stops, when the upper peripheries of the holes 3a are contacted with the nails 6a. When the knob 3 is moved in the upward and downward direction, it is guided by the protruding pieces 6f having a rectangular form opened on one side, with which the elastic engaging pieces 3b are engaged, to be moved right below and above, without instability feeling with a good operation feeling. The engaging pieces 4h slide downward in a state where they are contacted with pressure with the protruding pieces 3g. The manipulation lever 3e is lowered to thrust the thrust operation portion 10a to turn-on the tact switch 10. The node bodies 7 and 8 descend together with the knob 3 to move from the first inclined surface 4m of the first node groove 4j to the first inclined surface 4m of the second node groove 4k.

The operation feeling when the knob 3 is manipulated by pushing is obtained owing to the node member consisting of the node bodies 7 and 8, the node spring 9, the node grooves 4g and 5b, as well as the node member of the tact switch 10. Operation force is strengthened by the fact that the node bodies 7 and 8 climb at first the first node groove 4j formed in a two-stage inclination, when the knob 3 is manipulated by pushing. When they move on the vertical second node groove 4k, node feeling is obtained owing to the node of the thrust operation portion 10a of the tact switch 10, etc. In this way a good operation feeling can be obtained.

When a finger is withdrawn from the knob 3, the knob 3 rises owing to a return spring of the tact switch 10, etc. and further when the node bodies 7 and 8 energized by the node spring 9 move from the second node groove 4k to the first node groove 4j, the knob 3 returns to the initial OFF position owing to the inclined first node groove 4j. The manipulation lever 3e is separated from the thrust operation portion 10a to move upward so that it is in a state indicated in Fig. 6. The lower peripheries of the holes 3a are brought into contact with the nails 6a. Then, when the knob 3 is manipulated again by pushing, the tact switch 10 is turned off.

When the knob 4 is manipulated by pivot in a direction indicated by an arrow A, the knob 4 is pivoted around the center of the nails 6b. The inner side wall 4d thrusts the thrust operation portion 12a to turn-on the tact switch 12. In this way pivot of the knob 4 is stopped. The engaging pieces 4h pivot within the engaging portions 3h in a state where the protruding pieces 3g are contacted with pressure with the inner surfaces of the protruding pieces 3g.

The node groove 4g is pivoted in the direction indicated by the arrow A together with the knob 4 and the node body 7 runs on the second inclined surface 4n from the first inclined surface 4m of the first node groove 4j. For this reason operation force of thrusting the knob 4 increases with increasing pivot angle of the knob 4. Finally it turns-on the switch and stops. Operation feeling when the knob 4 is manipulated by pivot is obtained owing to the node member consisting of the node body 7, the node spring 9 and the node groove 4g as well as the node member of the tact switch. In this way a good operation feeling can be obtained.

That is, when the knob 4 is manipulated by pushing, the node body 7 energized by node spring 9 overcomes the first inclined surface 4m from the central portion of the first node groove 4j to move to the second inclined surface 4n so that the operation force varies to increase. Required operation force is increased further by the node of the thrust operation portion 12a of the tact switch 12, etc. so that a good operation feeling can be obtained.

When a finger is withdrawn from the knob 4, the node body 7 energized by the node spring 9 goes down the second inclined surface 4n of the first node groove 4j and the knob 4 pivots to return to the first inclined surface 4m, which is the original OFF position. The inner side surface 4d is separated from the thrust operation portion 12a and moves transversally to be in the state indicated in Fig. 5. On the contrary, when the knob 4 is manipulated by pivot in a direction indicated by an arrow B, which is opposite to the direction indicated by the arrow A, the tact switch 13 is turned-on.

Since, in case where the knob 5 is manipulated by pivot, it works similarly to the knob 4, explanation thereof will be omitted.

### Reference Numerals

- 1: steering
- 2: steering switch
- 3, 4, 5: knob
- 3c: supporting portion
- 3d: insertion portion
- 4d, 4e: inner side wall
- 4g, 5b: node groove
- 4j: first node groove
- 4k: second node groove
- 4m: first inclined surface
- 4n: second inclined surface
- 7, 8: node body
- 7a, 8a: blind hole
- 9: node spring
- 10, 12, 13: tact switch
- 10a, 12a, 13a: thrust operation portion

## Claims

1. Construction of a composite switch, in which a plurality of knobs (3), (4) and (5) are juxtaposed, characterized in that said knob (3) is a manipulation body for a push button switch, and said knobs (4) and (5) are manipulation bodies for pivot switches disposed on both the sides of said knob (3), adjacent thereto.

2. Construction of a composite switch according to Claim 1, characterized in that a supporting portion (3c) having an insertion portion (3d), into which node bodies (7) and (8) as well as a node spring (9) are inserted, is formed in said knob.

3. Construction of a composite switch according to Claim 2, characterized in that said node spring (9) is a coil spring disposed within said supporting portion (3c) in a transversal direction, one end of which is inserted into a blind hole (7a) formed in one (7) of said node bodies and the other end of which is inserted into a blind hole (8a) formed in the other (8) of said node bodies.

4. Construction of a composite switch according to Claim 3, characterized in that in each of said knobs (4) and (5) engaging pieces (4h) are formed on a surface facing said knob (3) and an engaging portion (3h), with which said engaging pieces (4h) are contacted with pressure, is formed in said knob (3).

5. Construction of a composite switch according to either one of Claims 1, 2, 3 and 4, characterized in that in said knobs (4) and (5) node grooves (4g) and (5b), with which said node bodies (7) and (8) are contacted with pressure, are formed on surfaces facing said knob (3), respectively.

6. Construction of a composite switch according to either one of Claims 1, 2, 3, 4 and 5, characterized in that each of said node grooves (4g) and (5b) includes a first node groove (4j), with which one of said node bodies (7) and (8) is contacted with pressure, when said knobs (4) and (5) are pivoted, and a second node groove (4k), with which one of said node bodies (7) and (8) is contacted with pressure, when said knob (3) is manipulated by pushing.

7. Construction of a composite switch according to Claim 6, characterized in that a node member of said knobs (3), (4) and (5) consists of a node spring (9), two node bodies (7) and (8) disposed at the two ends of said node spring (9), and node grooves (4g) and (5b) formed on the knobs (4) and (5).

8. Construction of a composite switch according to either one of Claims 1, 2, 3, 4, 5, 6 and 7, characterized in that said supporting portion (3c) includes a manipulation lever (3e) thrusting a thrust operation portion (10a) of a tact switch (10)

9. Construction of a composite switch according to Claim 7, characterized in that each of said knobs (4) and (5) includes inner side walls (4d) and (4e) operating tact switches (12) and (13) juxtaposed to each other, thrust operation portions (12a) and (13a) of which are directed outward.

10. Construction of a composite switch according to either one of Claims 1, 2, 3, 4, 5, 6, 7, 8 and 9, characterized in that said knobs (3), (4) and (5) are manipulation bodies for a steering switch disposed on a side wall of a pad portion of a steering for an automobile.
